# EUROPÄISCHE PATENTANMELDUNG

(11) **EP 2 428 763 A1**
(43) Veröffentlichungstag der Anmeldung: **14.03.2012**
(21) Anmeldenummer: 11176462.7
(22) Anmeldetag: 03.08.2011
(51) Int. Cl.: G01B 3/48, G01B 5/20, G01B 7/28

(54) **Vorrichtung und Verfahren zur wegmessenden Gewindeprüfung**

(30) Priorität: 03.08.2010 DE 102010038830
(71) Anmelder: ARTIS Gesellschaft für angewandte Meßtechnik mbH, 29646 Bispingen-Behringen (DE)
(72) Erfinder: Lange, Dirk, 21335 Lüneburg (DE); Mohr, Ulrich, 34132 Kassel (DE); Redecker, Volker, 29646 Bispingen (DE)
(74) Vertreter: Wegner, Hans

(57) **Zusammenfassung**

Die vorliegende Erfindung betrifft gemäß einem ersten Aspekt eine Vorrichtung zur Gewindeprüfung umfassend zumindest einen Prüfdorn **(6),** zum Prüfen eines Gewindes **(8),** der ausgebildet ist, um mit einer Maschinenachse **(2)** einer Werkzeugmaschine **(1)** verbunden zu werden und einen mit dem Prüfdorn **(6)** und der Maschinenachse **(2)** verbindbaren Wegsensor **(12)** zur Erfassung eines maximalen Weges **(23),** den der Prüfdorn **(6)** in das Gewinde **(8)** eingedreht werden kann.

## Beschreibung

### 1. Technisches Gebiet

Die vorliegende Erfindung betrifft eine Vorrichtung für die Gewindeprüfung in einer Werkzeugmaschine sowie zugehörige Verfahren.

### 2. Der Stand der Technik

Heutzutage werden hohe Anforderungen an die Wirtschaftlichkeit und Produktivität von Fertigungsanlagen gestellt. Auf der anderen Seite bestehen aber auch hohe Ansprüche an die Qualität der gefertigten Werkstücke. Diese gegenläufigen Zielrichtungen lassen sich zumeist nur durch einen hohen Automatisierungsgrad erreichen. Zusätzlich werden unterschiedliche Fertigungsverfahren in eine Werkzeugmaschine integriert, um Taktzeiten und Maschinenbediener reduzieren zu können. Ein Beispiel ist die Verfahrensintegration von Prozessen mit bestimmter Schneide und Schleifbearbeitungen in einem Bearbeitungszeitraum.

Bekannte Systeme zur automatisierten Gewindeprüfung werden in eine Fertigungslinie integriert bzw. als eigenständige Testeinheit bereitgestellt. Dazu werden zumeist extra Messstationen oder Messzellen in die Fertigungslinie integriert, um eine automatisierte Messung durchzuführen. Alternativ sind Handprüfgeräte verfügbar, mit denen das Gewinde manuell geprüft werden kann.

Bei der Messung von Qualitätskenngrößen mit nachgeschalteten Messzellen wird das Bauteil aus der Maschine ausgeschleust und automatisch in die Messzelle eingelegt oder in Stichproben manuell der Messeinrichtung zugeführt. Dies bedeutet einen hohen Investitionsaufwand für zusätzliche Messstationen und zumeist eine zeitverzögerte Prüfung. Das kann dazu führen, dass Qualitätsabweichungen erst mit einer erheblichen Zeitverzögerung erkannt werden und sich daraus resultierend eine hohe Ausschussquote ergibt. Teilweise sind Ansätze bekannt, Durchmesser und Geometrien mit induktiven Messtastern direkt in der Maschine zu messen. Im Bereich der Gewindeprüfung jedoch wird entweder auf nachgeschalteten Stationen automatisch oder manuell von Hand geprüft.

Grundsätzlich erfolgt die Prüfung der Qualität von Innengewinden nach DIN 13 Teil 18 folgendermaßen: Der Gewinde-Gutlehrdorn soll sich von Hand ohne Anwendung besonderer Kraft in die ganze Länge des Gewindes einschrauben lassen. Ist dies nicht möglich, dann genügt das Gewinde nicht den Anforderungen. Der Gewinde-Ausschusslehrdorn darf sich von Hand ohne Anwendung besonderer Kraft in das Werkstückgewinde von beiden Seiten nicht mehr als zwei Umdrehungen einschrauben lassen. Lässt er sich mehr als zwei Umdrehungen einschrauben, genügt das Gewinde den Anforderungen nicht.

Durch die Offenlegungsschrift DE 10 2006 034 823 A1 ist eine Vorrichtung bzw. ein Verfahren zur Gewindeprüfung bekannt, wobei ein Prüfdorn in ein Gewinde eingedreht werden kann. Dabei können Signale, die sich auf das Eindrehen des Prüfdorns beziehen, erfasst und ausgewertet werden. Diese Signale können z. B. die physikalischen Größen Strom, Wirkleistung, Drehmoment und/oder ein Wegsignal bezeichnen.

Die Deutsche Patentanmeldung DE 40 17 376 A beschreibt eine Gewindeprüfeinrichtung zur Prüfung von Innengewinden. Eine Werkzeughalterung ist über eine Kupplung mit dem Antriebsmotor gekuppelt, welche bei einer dem Einschraubvorgang entsprechenden Drehbewegung bei Überschreiten eines vorgegebenen Drehmoments federnd nachgibt. Darüber hinaus weist die Gewindeprüfeinrichtung ein Linearpotentiometer zur axialen Positionsbestimmung auf.

Die Deutsche Patentanmeldung DE 35 34 115 A beschreibt eine selbsttätige Montage- und / oder Prüfeinrichtung mit einem Werkzeugarm an einer drehbar in einem am Werkzeugarm angeordneten Spindelgehäuse gelagerten mit einer Aufnahme für ein Montage- oder Prüfwerkzeug ausgestatteten Arbeitsspindel. Die Verschiebung der Spindelachse in Achsrichtung wird mittels eines Wegaufnehmers gemessen.

Die Deutsche Patentanmeldung DE 43 24 109 A beschreibt eine Gewindeprüfvorrichtung. Hierbei kann die Einschraubtiefe des Prüfdorns mittels einer Lichtschranke gemessen werden, die an einem gabelförmigen Träger angeordnet ist.

Die Deutsche Patentschrift DE 16 23 212 beschreibt eine selbsttätige Gewindeprüfvorrichtung. Die Einschraubtiefe kann durch eine Relativbewegung zwischen Meßspindel und Schlitten bestimmt werden. Hierbei kommen Schaltnocken zum Einsatz, die Mikroschalter betätigen.

Jedoch lässt sich durch das Eindrehen zunächst nur feststellen ob der Gewindedurchmesser bzw. das Gewinde selbst den vorgegebenen Anforderungen entspricht. Für viele Prozesse reicht dies jedoch nicht aus und weitere Kenngrößen sind zur zuverlässigen Qualitätskontrolle nötig. Beispielsweise ist es für sicherheitsrelevante Bauteile wichtig, dass nicht nur das Gewinde richtig geschnitten ist, sondern die hierfür vorgesehene Schraube optimal in das Gewinde eingedreht werden kann, um einen bestmöglichen Halt zu gewährleisten.

Der vorliegenden Erfindung liegt daher das Problem zugrunde, eine einfach und kostengünstige einsetzbare Vorrichtung, sowie entsprechende Verfahren bereitzustellen, mit denen eine Gewindeprüfung durchgeführt werden kann, wobei zuverlässigere Kriterien und umfassendere Parameter als im Stand der Technik für die Beurteilung des Gewindes bereitgestellt werden.

### 3. Zusammenfassung der Erfindung

Dieses Problem wird gemäß einem ersten Aspekt der Erfindung durch eine Vorrichtung zur Gewindeprüfung gelöst, die zumindest einen Prüfdorn umfasst, der ausgebildet ist, um mit einer Maschinenachse einer Werkzeugmaschine verbunden zu werden, und einen mit dem Prüfdorn und der Maschinenachse verbindbaren Wegsensor zur Erfassung eines maximalen Weges, den der Prüfdorn in das Gewinde eingedreht werden kann.

Durch die vorliegende Erfindung kann also gleichzeitig mit der Prüfung des Gewindes auch die Gewindetiefe bestimmt werden. Dadurch wird der hohe Aufwand zur exakten Positionierung des Prüfdorns erheblich reduziert. Nach aus dem Stand der Technik bekannten Verfahren werden beide Schritte nacheinander ausgeführt, d.h. an eine Prüfung des Gewindes in einem ersten Schritt schließt sich die Prüfung der Gewindetiefe in einem zweiten Schritt an. Durch eine gleichzeitige Messung kann die Qualität eines Werkstücks hinsichtlich dieser Kriterien wesentlich leichter und effizienter durchgeführt werden.

Diese über den Stand der Technik hinausgehende Vorrichtung zur Gewindeprüfung ermöglicht auch die vollständige und prozessnahe Prüfung eines Gewindes in derselben Werkzeugmaschine, in der es zuvor hergestellt wurde, beispielsweise, indem die Vorrichtung in einem Sonderwerkzeughalter an der Werkzeugmaschine angeordnet wird. Es ist keine spezielle Werkzeugmaschine zur Gewindeprüfung nötig.

Insbesondere die Ausbildung des Wegsensors, um nach dem Eindrehen des Prüfdorns eine Relativbewegung zwischen dem Prüfdorn und der Maschinenachse zu erfassen, ermöglicht auf eine besonders einfache Weise die Bestimmung eines zurückgelegten Weges und damit der Gewindetiefe. Es ist jedoch auch denkbar, eine Messung des absoluten zurückgelegten Weges zu messen, z.B. durch eine andere Anordnung des Wegsensors.

Vorzugsweise erfolgt die vom Wegsensor erfasste Relativbewegung koaxial oder parallel zum Prüfdorn. Auf diese Art kann das zurückgelegte Wegstück direkt gemessen werden, wobei durch die Linearität der Verschiebung auch eine einfachere Messung ermöglicht wird.

Vorzugsweise umfasst der Wegsensor einen potentiometrischen Wegaufnehmer. Hierdurch kann durch Messung eines variablen Widerstandes der aus der Relativbewegung resultiert eine veränderte Spannung sehr genau bestimmt werden, was die genaue Messung eines zurückgelegten Weges ermöglicht. Es sind jedoch auch andere Ausführungsformen denkbar, z.B. kann eine Wegmessung auch über optische Signale erfolgen.

Bevorzugt befindet sich die Vorrichtung in einem Messhalter, der ausgebildet ist, um in das Werkzeugmagazin der Werkzeugmaschine eingewechselt zu werden. Diese Ausführungsform, insbesondere die Verwendung von Standardwerkzeugschnittstellen (z.B. HSK, Capto, DIN), ermöglicht den einfachen Einsatz des Messhalters in dem Werkzeugmagazin der Maschine. Darüber hinaus eignet sich diese Vorrichtung zum Einsatz in einfachen Standardmaschinen, welche für die Fertigung nicht mehr benötigt werden. Ein weiterer Vorteil hiervon ist eine Kostenersparnis gegenüber Spezialmaschinen.

Vorzugsweise ist die Vorrichtung ausgebildet, um vor der ersten Gewindeprüfung einen Referenzwert aufzunehmen und zu speichern. Durch die automatische Kalibrierung entfällt eine langsamere und häufig ungenauere manuelle Kalibrierung. Des Weiteren ist diese Art der Kalibrierung ergonomischer gegenüber der manuellen Kalibrierung.

Vorzugsweise wird der Referenzwert durch den Abstand zwischen dem dem Gewinde zugewandten Ende des Prüfdorns in einer Ausgangsstellung und der dem Prüfdorn zugewandten Öffnung des Gewindes bestimmt. Durch diese vorteilhafte Anordnung können Prüfdorne unterschiedlicher Länge verwendet werden. Darüber hinaus ist dieses Vorgehen unabhängig von Ungenauigkeiten beim Einspannen des Prüfdorns. Grundsätzlich sind jedoch auch andere Vorgehensweisen zur Bestimmung der Referenzwerts möglich.

Vorzugsweise umfasst die Vorrichtung ferner eine Auswerteeinheit, an welche Messwerte drahtlos übertragen werden. Durch die automatisierte Messung kann eine große Auswahl an Messwerten an ein Auswertesystem übertragen werden, welches die Messung überwacht. Dies ist einerseits ergonomischer, andererseits aber auch schneller und präziser als manuelles Messen.

Vorzugsweise kann die Auswerteeinheit durch den Vergleich zumindest eines Messwerts mit zumindest einem Sollwert ein fehlerhaftes Gewinde erkennen. Ein einfaches Einstellen von Sollwerten erlaubt den direkten Abgleich mit Toleranzwerten. So kann man ohne großen Aufwand die Parameter eines zu prüfenden Gewindes ändern, aber auch die Toleranzwerte anpassen, z.B. eine geringe Toleranz für Gewinde bei denen die Länge des Gewindes sehr genau gefertigt sein muss und gröbere Vorgaben für Gewinde, die eine geringere Genauigkeit erfordern.

Vorzugsweise betrifft der zumindest eine Sollwert die Form und/oder die Länge des Gewindes. Durch Vergleichen eines Sollwertes für die Länge des Gewindes mit einem Messwert lässt sich die Qualität eines Gewindes über die üblichen Parameter (z.B. Durchmesser des Gewindes) hinaus bestimmen.

Gemäß einem Aspekt der Erfindung wird das Problem der Erfindung durch ein Verfahren zur Gewindeprüfung gelöst, umfassend den Schritt der Prüfung des Gewindes und seiner Tiefe mit einem Prüfdorn unter Verwendung einer der oben erläuterten Vorrichtungen.

### 4. Kurze Beschreibung der begleitenden Figuren

Im Folgenden werden Aspekte der vorliegenden Erfindung unter Bezugnahme auf die begleitenden Figuren erläutert. Diese Figuren zeigen:
- **Fig. 1:**: eine schematische Darstellung eines Systems zur automatisierten Gewindeprüfung gemäß eines Ausführungsbeispiels der vorliegenden Erfindung;
- **Fig. 2:**: eine schematische Darstellung eines Werkzeughalters mit Stator gemäß eines Ausführungsbeispiels der vorliegenden Erfindung;
- **Fig. 3:**: ein Blockschaltbild der Rotorelektronik und des Auswertemoduls gemäß eines Ausführungsbeispiels der vorliegenden Erfindung;
- **Fig.4:**: eine schematische Darstellung einer Referenzfahrt zur Kalibrierung der erfindungsgemäßen Vorrichtung;
- **Fig. 5:**: eine schematische Darstellung der Gewindelängenmessung gemäß eines Ausführungsbeispiels der vorliegenden Erfindung;
- **Fig. 6:**: ein Beispiel eines Signals einer Referenzfahrt zur Kalibrierung des Systems zur Gewindemessung;
- **Fig.7:**: ein Beispiel eines Signals zur Gewindemessung.

### 5. Detaillierte Beschreibung von bevorzugten Ausführungsformen

Im Folgenden werden gegenwärtig bevorzugte Ausführungsbeispiele der erfindungsgemäßen Vorrichtung und Verfahren zur wegmessenden Gewindeprüfung genauer erläutert.

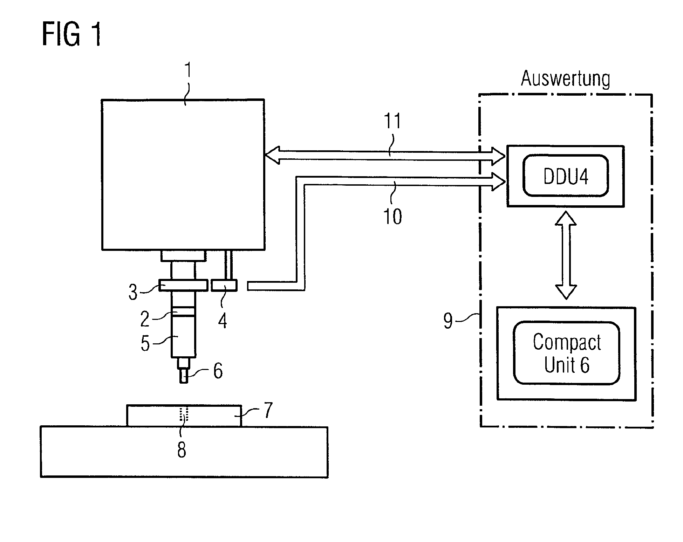

**Fig. 1** zeigt eine schematische Darstellung des Gesamtsystems eines Ausführungsbeispiels der vorliegenden Erfindung. Man erkennt die Werkzeugmaschine **1** und das im Arbeitsraum der Maschine befestigte Werkstück **7** mit dem zu prüfenden Gewinde **8.** An der Werkzeugmaschine **1** ist ein Werkzeughalter **5** befestigt, in dem sich ein Prüfdorn **6** befindet. Die Energieversorgung des Rotors **3** als auch die Datenübertragung wird über ein magnetisches Wechselfeld zwischen dem Rotor **3** und einem Stator **4** verwirklicht. Die bei der Messung auftretenden Signale werden daher berührungsfrei zwischen Rotor **3** und Stator **4** übertragen und können dann drahtlos oder drahtgebunden zum Auswertemodul **9** transferiert werden **10.** Darüber hinaus besteht eine drahtlose oder drahtgebundene Verbindung **11** zwischen der Werkzeugmaschine **1** und dem Auswertemodul **9.** Hierüber können z.B. Parameter wie Vorschub eingestellt werden. Das Auswertemodul **9** kann über ein Bildschirmmodul verfügen, welches zur Visualisierung, Bedienung und/oder Datenspeicherung eingesetzt werden kann (z.B. ein Auswertemodul vom Typ DDU4 und ein Bildschirmmodul vom Typ Compact Unit 6 des Anmelders). Beim Starten der Werkzeugmaschine **1** sendet diese ein Startsignal an das Auswertemodul **9.**

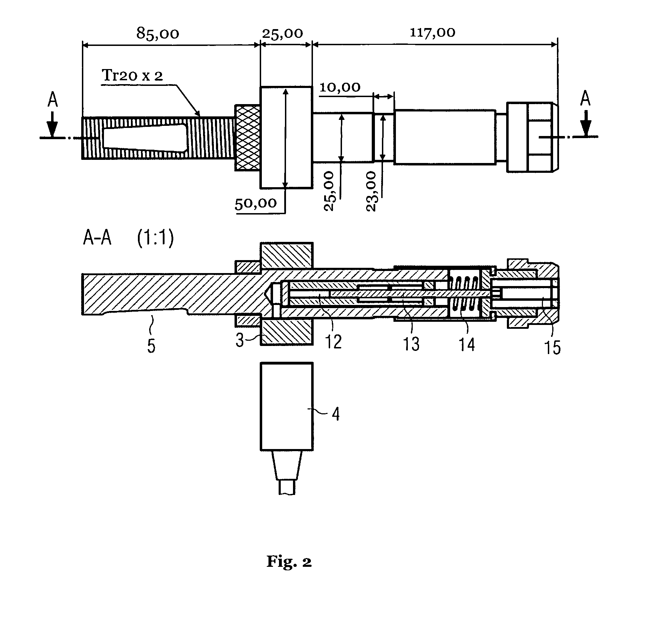

**Fig. 2** stellt eine detaillierte Zeichnung eines Werkzeughalters **5** und einen Stator **4** dar. An dem Werkzeughalter **5** befindet sich der Rotor **3.** Die untere Hälfte der **Fig. 2** zeigt einen Schnitt entlang der Längsachse des Werkzeughalters **5.** Hierin befindet sich ein potentiometrischer Wegsensor **12,** welcher zur Messung einer Relativbewegung zwischen Prüfdorn (Nr. **6** in Fig. 1), der in der Spannzange **15** befestigt ist, und dem Werkzeughalter **5** geeignet ist. Der vom Prüfdorn **6** ausgeübte Druck wird über eine Druckfeder **14** und eine Schubstange **13** auf den Wegsensor **12** übertragen. Dadurch wird der Wegsensor **12** bewegt und es kann ein Wegsignal gemessen werden. Des Weiteren verfügt der Werkzeughalter **5** über eine drehmomentabhängige Rutschkupplung (nicht gezeigt). Trifft der Prüfdorn **6** auf ein zu kleines Gewinde **8** (bzw. kein Gewinde) bei anstehendem Vorschub der Werkzeugmaschine **1,** verhindert der Druckausgleich softwaretechnisch eine Beschädigung des Werkstücks **7** und des Prüfdorns **6,** da bei Überschreiten eines definierten Weges ein Alarmsignal ausgelöst wird. Die Rutschkupplung, die bei einem zu hohen Drehmoment durchrutscht, verhindert ebenfalls bei zu kleinen Gewinden **8** eine Beschädigung des Prüfdorns **6** und des Werkstücks **7.** Der Prüfdorn **6** ist immer nach der jeweiligen Gewindegröße der vorher durchgeführten Gewindebearbeitung ausgelegt.
   Wird das NC-Programm zum Prüfen gestartet, erhält das Auswertemodul **9** ein Startsignal. Im Folgenden werden die Wegsignale und die Drehmomentsignale des Werkzeughalters **5** gemessen und ausgewertet. Die Vorschubkraft wird über Dehnungsmessstreifen (hier nicht gezeigt) gemessen. Stimmen die Messwerte nicht mit den vorher eingestellten Parametern (z. B. Durchmesser des Gewindes **8)** überein, wird davon ausgegangen, dass das geschnittene Gewinde **8** nicht in Ordnung ist. Der dann generierte Alarm wird an die Werkzeugmaschine **1** weitergeleitet und führt zum Ausschleusen oder der manuellen Überprüfung des Werkstücks 7. Auf diese Weise ist ein schnelles Erkennen fehlerhafter Gewinde **8** möglich, wodurch Ausschuss frühzeitig erkannt werden kann.

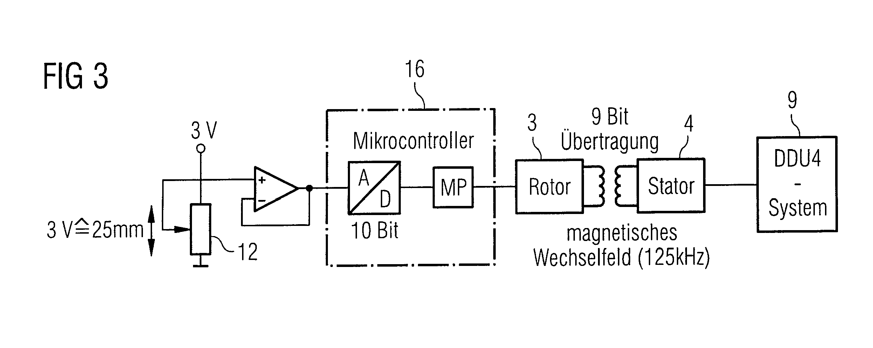

**Fig. 3** stellt ein Blockschaltbild der Rotorelektronik dar. Das Signal wird im Werkzeughalter **5** über den potentiometrischen Wegsensor **12** aufgenommen, wobei in einer bevorzugten Ausführungsform eine Weglänge von 25 mm einer Spannungsänderung von 3 V entspricht. Über einen Impedanzwandler wird das Signal an einen ebenfalls im Werkzeughalter **5** befindlichen Mikrocontroller **16** weitergeleitet. Hierin wird das Signal über einen A/D Wandler digitalisiert. Die Energieversorgung des Rotors **3** und die Datenübertragung werden über ein magnetisches Wechselfeld zwischen Rotor **3** und Stator **4** verwirklicht. Hierzu wurde sowohl im Rotor **3** als auch im Stator **4** eine Spule integriert. Das Wechselfeld wird mit einer Frequenz von 125 kHz vom Stator erzeugt. Da bei diesem Übertragungsverfahren eine Wiederholrate von 10 ms für jeweils einen Weg- und Drehmomentmesswert vorgeschrieben ist, steht nur eine beschränkte Bandbreite zur Verfügung. Somit muss die Signalauflösung herabgesetzt werden. Der Rotor **3** bezieht seine gesamte Energieversorgung aus dem magnetischen Wechselfeld und stellt somit in diesem System einen passiven Transponder dar. Durch die Induktionswirkung der im Rotor **3** verbauten Spule und einen hinzu geschalteten Shunt-Widerstand kann das magnetische Wechselfeld gezielt belastet und entlastet werden. Wie erwähnt, erfolgt die Energieversorgung vorzugsweise über einen Stator **4,** der die Energie und Signale induktiv überträgt. Der Informationsfluss vom Werkzeughalter **5** zum Stator **4** erfolgt ebenfalls über die induktive Strecke.
   In einer weiteren Ausführungsform erfolgt nur die Energieversorgung über einen Stator **4,** der die Energie induktiv überträgt. Der Informationsaustausch erfolgt über Funk. In einer weiteren Ausführungsform erfolgt die Energieversorgung über einen integrierten Akkumulator (nicht dargestellt in den Figuren), der entweder induktiv oder über Kontakte geladen werden kann. Dabei kann der eine Pol die Masse des Halters und der Maschine sein, der andere Pol ist entweder eine Steckerbuchse oder ein Kontaktring.

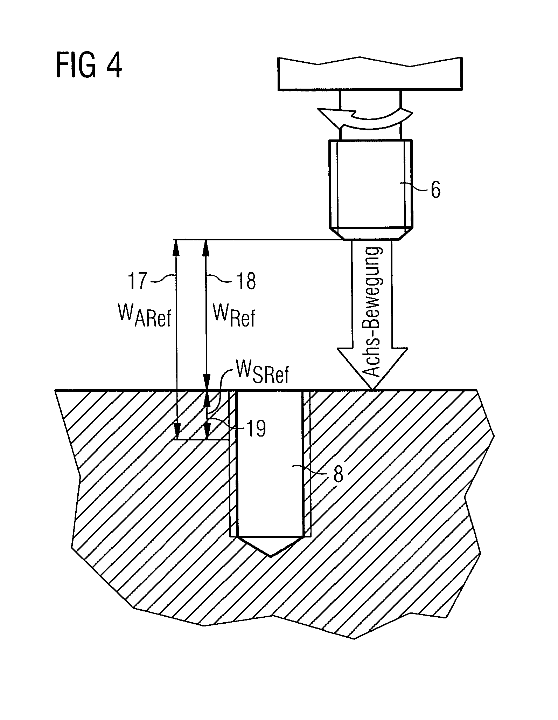

**Fig. 4** ist eine schematische Darstellung einer Referenzfahrt **18,** welche nach jedem neuen Einsatz des Werkzeughalters **5** und Auswechseln des Prüfdorns **6** durchgeführt werden muss. Bei der Referenzfahrt **18** wird der Abstand zwischen der Spitze des Prüfdorns **6** und der Werkstückoberfläche ermittelt. Dies kann über einen zusätzlichen Wegsensor geschehen oder über in der NC-Maschine gespeicherte Weginformationen. In einer beispielhaften Ausführungsform beträgt der maximale Weg des Wegsensors 20 mm. Um eine Kollision, bzw. eine Überlastung, zwischen Prüfdorn **6** und Werkstück **7** auszuschließen, wird bei einer Auslenkung des Wegsensors **12** von mehr als 18 mm ein Alarmsignal generiert und von dem Auswertemodul **9** an die Werkzeugmaschine **1** weitergeleitet. Bei einem zu hohen Drehmoment, z.B. bei zu kleinen Gewinden **8,** dreht die Rutschkupplung des Werkzeughalters **5** durch. Hierdurch können Schäden vermieden werden. Zur Kalibrierung wird der Weg der Maschinenachse **2** W_{ARef} **19** manuell eingegeben. Dabei ist zu beachten, dass aus oben genannten Gründen der Vorschubweg der Maschine zur voraussichtlichen Endposition des Prüfdorns **6** so einzustellen ist, dass der Wegsensor eine Auslenkung durch die Werkstückoberfläche erfährt, diese aber maximal 18 mm betragen darf. Die Ermittlung des einzugebenden Weges kann über einen zusätzlichen Wegsensor realisiert werden, der entsprechend im System eingebunden wird. Der Werkzeughalter **5** vorzugsweise aufweisend ein Schnellwechselfutter, Wegsensor **12,** die Rutschkupplung und den Prüfdorn **6** wird nun in Rotation versetzt und so in Richtung Werkstück **7** gefahren, dass der Prüfdorn **6** auf die Werkstückoberfläche trifft und der Wegsensor **12** eine Auslenkung erfährt. Der Sensorweg W_{SRef} **19** ergibt sich aus dem während des Messvorgangs maximal aufgetretenen Druckausgleich und daraus folglich aus der Verschiebung des Potentiometer-Schleifers im Wegsensor **12.** Hieraus kann nun der Referenzweg W_{Ref} **18** über folgenden Zusammenhang ermittelt werden: W_{Ref} = W_{ARef} - W_{SRef}.

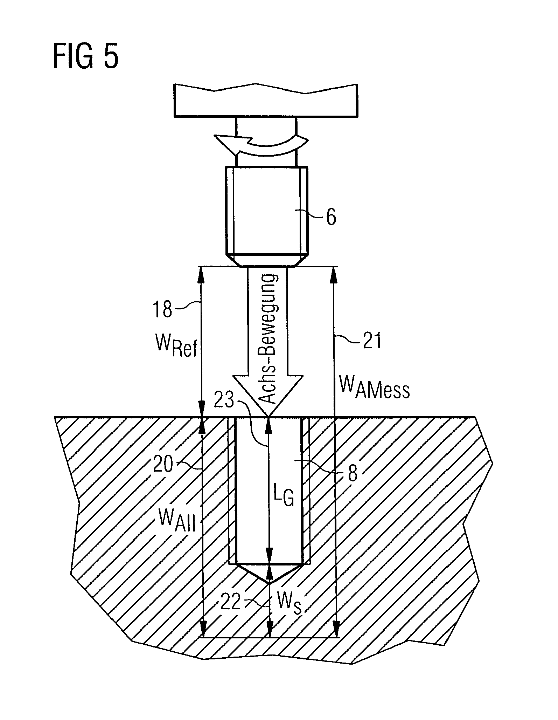

**Fig. 5** zeigt eine schematische Darstellung der eigentlichen Messung, insbesondere der Messung der Gewindelänge **23.** Wie bei der Referenzfahrt **18** ist der Weg W_{AMess} **21** den die Maschinenachse **2** hierbei zurücklegt, mindestens auf eine Länge einzustellen, sodass der Wegsensor **12** eine Auslenkung durch die erwartete Gewindelänge, bzw. den Sollwert der Gewindelänge erfährt, diese aber genau wie bei der Referenzfahrt nicht mehr als 18 mm betragen darf. Nun wird der Werkzeughalter **5** mit Prüfdorn **6,** wie schon bei der Referenzfahrt **18,** in Rotation versetzt und so in Richtung Werkstück **7** gefahren, dass der Prüfdorn **6** in die Gewindebohrung **8** eindringt. Zur Berechnung der Gewindelänge L_{G} **23** wird zunächst der von der Maschinenachse **2** ab dem Nullpunkt zurückgelegte Weg W_{AN} **20** benötigt. Der Nullpunkt befindet sich hierbei auf der Werkstückoberfläche. W_{AN} **20** ergibt sich aus dem während des Messvorgangs von der Maschinenachse **2** zurückgelegten Weg W_{AMess} **21** und dem zuvor ermittelten Referenzweg W_{Ref} **18** über folgenden Zusammenhang: W_{AN} = W_{AMess} - W_{Ref}. Um nun die Gewindelänge **L_{G} 23** zu berechnen, wird der vom Wegsensor **12** ermittelte Weg W_{S} **22** von dem durch die Maschinenachse **2** ab dem Nullpunkt zurückgelegten Weg W_{AN} **20** abgezogen. Wie auch schon bei der Referenzfahrt erläutert, ergibt sich der Weg W_{S} **22** analog zu W_{SRef} **19** aus dem maximalen axialen Druckausgleich, bzw. der Verschiebung des Potentiometer-Schleifers im Wegsensor **12.** Somit errechnet sich die Gewindelänge L_{G} **23** wie folgt: L_{G} = W_{AN} - W_{S}. Die Genauigkeit der Gewindetiefenmessung wird dabei von der Genauigkeit der Maschine oder des externen Wegmesssystems bestimmt. Die Gesamtauflösung ist im Normalfall besser als 0.1 mm.

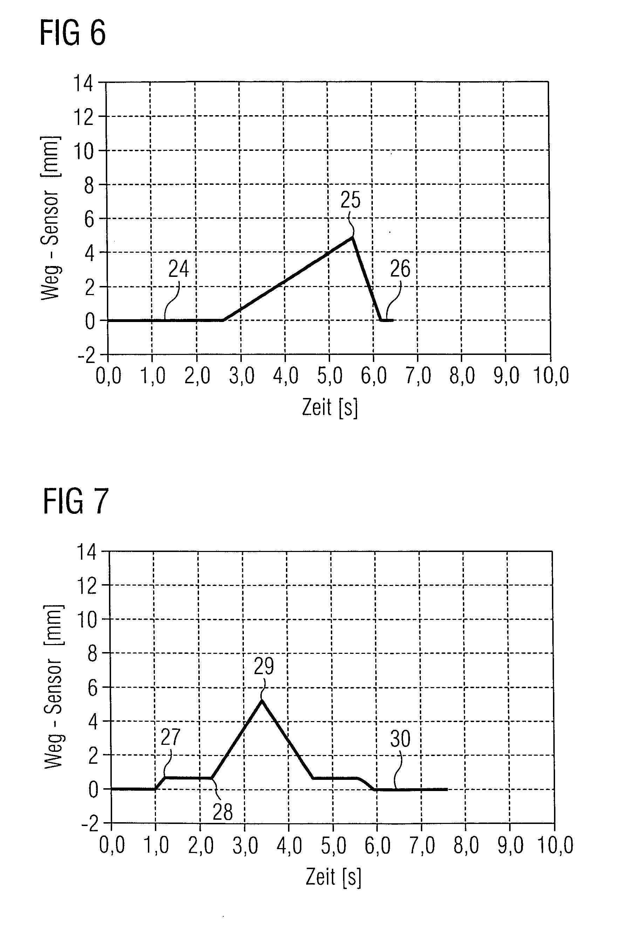

Die **Fig. 6** und 7 zeigen beispielhafte, charakteristische Verläufe des Sensorweges. In **Fig. 6** ist der Sensorweg **19** für eine Referenzfahrt gezeigt. Charakteristisch für den Verlauf ist der lineare Anstieg und Abfall des Sensorwegs. Die Steigung des jeweiligen Abschnittes ist hierbei abhängig von der Verfahrgeschwindigkeit der Vorschubachse der Werkzeugmaschine **1.** Bei der Referenzfahrt **17** trifft die Spitze des Prüfdorns **6** direkt auf die Werkstückoberfläche und der Wegsensor **12** erfährt einen Hub, beginnend bei Bezugszeichen **24.** Hat die Vorschubachse ihren Endpunkt erreicht (in **Fig. 6** entspricht dies der Spitze des Verlaufsgraphen **25),** verfährt sie zum Ausgangspunkt zurück, was einen Abfall des Signals zur Folge hat, bis der Wegsensor wieder in Ausgangsposition **26** ist.

Bei der Messung in **Fig. 7** dringt der Prüfdorn 6 nach ca. 1 Sekunde in die Gewindebohrung ein **27** und nach ca. 2.2 Sekunden wird der Gewindeboden erreicht **28** und der Wegsensor **12** erfährt einen Hub. Beim maximalen Sensorweg (in **Fig. 7** die Spitze des Verlaufsgraphen **29)** hat die Vorschubachse ihre Endposition erreicht und verfährt nach dem Ausdrehen des Prüfdorns **6** zum Ausgangspunkt **30,** in umgekehrter Reihenfolge.

Die ermittelte Gewindelänge **23** wird in der Auswertung mit eingestellten Parametern verglichen. Stimmen diese Werte nicht überein, wird ein Alarm generiert und an die Werkzeugmaschine **1** weitergeleitet. Zum Beispiel kann das Messsystem bei Überschreiten eines maximalen Sensorwegs ein zu kleines Gewinde **8** erkennen und einen Alarm generieren. In einem weiteren Beispiel kann eine Messung keiner Veränderung des Wegsignals (im Wegsensor **12)** zur Erkennung eines zu langen Gewindes **8** führen und einen Alarm generieren. Darüber hinaus können alle Messdaten gespeichert werden, vorzugsweise in einem standardisierten Format, damit diese von gängigen Mess- und Statistikprogrammen (z.B. QDAS oder Measurelink) eingelesen werden können.

### Liste der Bezugszeichen:

- 1: Werkzeugmaschine
- 2: Maschinenachse
- 3: Rotor
- 4: Stator
- 5: Werkzeughalter
- 6: Prüfdorn
- 7: Werkstück
- 8: Gewinde
- 9: Auswerteeinheit
- 10: Datenübertragung zwischen Stator und Auswertemodul
- 11: Datenübertragung zwischen Werkzeugmaschine und Auswertemodul
- 12: Wegsensor
- 13: Schubstange
- 14: Druckfeder
- 15: Spannzange
- 16: Mikrocontroller
- 17: W_{ARef} Weg der Maschinenachse
- 18: W_{Ref} Referenzfahrt
- 19: W_{SRef} Sensorweg (Referenzfahrt)
- 20: W_{AN} Weg der Maschinenachse ab Nullpunkt
- 21: W_{AMess} gesamter Weg den die Maschinenachse während des Messvorgangs zurücklegt
- 22: W_{S} Sensorweg (Messung)
- 23: L_{G} Gewindelänge
- 24: Hub des Wegsensors bei Referenzfahrt
- 25: Endpunkt der Bewegung des Wegsensors (Referenzfahrt)
- 26: Ausgangspunkt (Referenzfahrt)
- 27: Eindringen des Prüfdorns in das Gewinde
- 28: Prüfdorn erreicht Gewindeboden
- 29: Endpunkt der Bewegung des Wegsensors (Messung)
- 30: Ausgangspunkt (Messung)

## Patentansprüche

1. Vorrichtung zur Gewindeprüfung umfassend:
a. zumindest einen Prüfdorn (6), zum Prüfen eines Gewindes (8), der ausgebildet ist, um mit einer Maschinenachse (2) einer Werkzeugmaschine (1) verbunden zu werden;
b. ein mit dem Prüfdorn (6) und der Maschinenachse (2) verbindbarer Wegsensor (12) zur Erfassung eines maximalen Weges (23), den der Prüfdorn (6) in das Gewinde (8) eingedreht werden kann.

2. Vorrichtung nach Anspruch 1, wobei der Wegsensor (12) ausgebildet ist, um nach dem Eindrehen des Prüfdorns (6) eine Relativbewegung zwischen dem Prüfdorn (6) und der Maschinenachse (2) zu erfassen.

3. Vorrichtung nach Anspruch 2, wobei die vom Wegsensor (12) erfasste Relativbewegung koaxial oder parallel zum Prüfdorn (6) verläuft.

4. Vorrichtung nach einem der vorhergehenden Ansprüche, wobei der Wegsensor (12) einen potentiometrischen Wegaufnehmer umfasst.

5. Vorrichtung nach einem der vorhergehenden Ansprüche, wobei sich die Vorrichtung in einem Messhalter (5) befindet, der ausgebildet ist, um in das Werkzeugmagazin der Werkzeugmaschine (1) eingewechselt zu werden.

6. Vorrichtung nach einem der vorhergehenden Ansprüche, wobei die Vorrichtung ausgebildet ist, um vor der ersten Gewindeprüfung einen Referenzwert (18) aufzunehmen und zu speichern.

7. Vorrichtung nach Anspruch 6, wobei der Referenzwert (18) bestimmt wird durch den Abstand zwischen dem dem Gewinde (8) zugewandten Ende des Prüfdorns (6) in einer Ausgangsstellung und der dem Prüfdorn (6) zugewandten Öffnung des Gewindes (8).

8. Vorrichtung nach einem der vorhergehenden Ansprüche, wobei die Vorrichtung ferner eine Auswerteeinheit (9) umfasst, an welche Messwerte drahtlos (10) übertragen werden.

9. Vorrichtung nach Anspruch 8, wobei die Auswerteeinheit (9) durch den Vergleich zumindest eines Messwerts mit zumindest einem Sollwert ein fehlerhaftes Gewinde (8) erkennt.

10. Vorrichtung nach Anspruch 9, wobei der zumindest eine Sollwert die Form und/oder die Länge des Gewindes (23) betrifft.

11. Verfahren zur Gewindeprüfung, umfassend den Schritt der Prüfung des Gewindes und seiner Tiefe mit einem Prüfdorn (6) nach einem der Ansprüche 1-10.
